# EUROPEAN PATENT APPLICATION

(11) **EP 4 693 084 A1**
(43) Date of publication of application: **11.02.2026**
(21) Application number: 24795601.4
(22) Date of filing: 05.03.2024
(51) Int. Cl.: G06F 21/56

(54) **RANSOMWARE ATTACK DETECTION METHOD AND APPARATUS, AND STORAGE SYSTEM**

(30) Priority: 23.04.2023 CN 202310469409; 30.06.2023 CN 202310804236
(71) Applicant: Huawei Technologies Co., Ltd., Shenzhen, Guangdong 518129 (CN)
(72) Inventor: HUANG, Mengyu, Shenzhen, Guangdong 518129 (CN); WANG, Yangchao, Shenzhen, Guangdong 518129 (CN); ZHOU, Qizhang, Shenzhen, Guangdong 518129 (CN); HU, Gang, Shenzhen, Guangdong 518129 (CN)
(74) Representative: Maiwald GmbH
(86) International application number: PCT/CN2024/080160
(87) International publication number: WO 2024/222214

(57) **Abstract**

This application discloses a ransomware attack detection method and apparatus, and a storage system, and pertains to the field of storage technologies. A computer device generates one or more honeypot files based on a file feature of a file in a storage system, deploys the one or more honeypot files in the storage system, and determines, based on operation behavior for the one or more honeypot files, whether the storage system is under a ransomware attack. The honeypot file proactively deceives an attacker to perform a ransomware attack, to effectively detect the ransomware attack. Because the honeypot file is generated based on the file feature of the normal file in the storage system, the honeypot file can well simulate the normal file in the storage system, so that it is difficult for the attacker to identify the honeypot file, thereby improving reliability of ransomware attack detection.

## Description

This application claims priorities to Chinese Patent Application No. 202310469409.7, filed on April 23, 2023, and entitled "METHOD FOR PREVENTING RANSOMWARE IN NAS SYSTEM", and to Chinese Patent Application No. 202310804236.X, filed on June 30, 2023, and entitled "RANSOMWARE ATTACK DETECTION METHOD AND APPARATUS, AND STORAGE SYSTEM", both of which are incorporated herein by reference in their entireties.

### TECHNICAL FIELD

This application relates to the field of storage technologies, and in particular, to a ransomware attack detection method and apparatus, and a storage system.

### BACKGROUND

With rapid development of information technologies, data plays an increasingly important role in the present era, and ransomware viruses also evolve and update. These viruses encrypt user data, causing the data inaccessible to victims. In addition, the viruses extort the victims to pay ransom in exchange for decryption keys. Otherwise, the victims may lose the data permanently. Emergence of massive data and ransomware viruses is accompanied by rise of the field of data security. How to reliably detect ransomware attacks to protect the user data from ransomware as much as possible is currently an important security requirement in the storage field.

### SUMMARY

This application provides a ransomware attack detection method and apparatus, and a storage system, to improve reliability of ransomware attack detection.

According to a first aspect, a ransomware attack detection method is provided. The method includes: generating one or more honeypot files based on a file feature of a file in a storage system; deploying the one or more honeypot files in the storage system; and determining, based on operation behavior for the one or more honeypot files, whether the storage system is under a ransomware attack.

In this application, the honeypot file is deployed in the storage system, and the constructed honeypot file proactively deceives an attacker to perform a ransomware attack, to effectively detect the ransomware attack. Because the honeypot file is decoupled from the normal file, the ransomware attack on the honeypot file does not affect the file. Therefore, deployment of the honeypot file can reduce a possibility of the ransomware attack on the normal file to some extent. In addition, because the honeypot file is generated based on the file feature of the file in the storage system, the honeypot file can well simulate the normal file in the storage system, so that it is difficult for the attacker to identify the honeypot file, thereby improving reliability of ransomware attack detection.

Optionally, an implementation of generating the one or more honeypot files based on the file feature of the file in the storage system includes: determining a target file type based on a first file feature of the file in the storage system, where the first file feature includes a file type; and generating a honeypot file of the target file type.

In this application, the file type of the honeypot file is determined based on the file feature of the file including the file type, so that the generated honeypot file can better fit a user environment, and it is difficult for the attacker to distinguish between the normal file and the honeypot file in the storage system by using the file type, thereby improving non-recognizability of the honeypot file and further improving accuracy of the ransomware attack detection performed based on the honeypot file.

Optionally, the first file feature further includes one or more of a file name, a file size, a creation timestamp, or a modification timestamp.

Optionally, the storage system includes a plurality of files, and an implementation of determining the target file type based on the first file feature of the file in the storage system includes: performing, by using a clustering algorithm, cluster analysis on the plurality of files by using a plurality of features included in the first file feature as a plurality of clustering dimensions, to obtain one or more cluster center files; and using a file type of the one or more cluster center files as the target file type.

Optionally, an implementation of generating the honeypot file of the target file type includes: generating the honeypot file of the target file type based on a second file feature of the file in the storage system, where the second file feature includes one or more of a file name, a file size, a creation timestamp, or a modification timestamp.

In a possible case, the second file feature includes the file name, and an implementation of generating the honeypot file of the target file type based on the second file feature of the file in the storage system includes: determining a file name of the one or more honeypot files based on a file name of a first file and/or a file name of a second file in the storage system, where the first file is a file whose file name has a smallest ASCII code value in the storage system, and the second file is a file whose file name has a largest ASCII code value in the storage system.

Optionally, an implementation of determining the file name of the one or more honeypot files based on the file name of the first file and/or the file name of the second file in the storage system includes: determining a first ASCII code threshold based on the ASCII code value of the file name of the first file, to enable an ASCII code value of a file name of a honeypot file determined based on the first file to be less than or equal to the first ASCII code threshold; and/or determining a second ASCII code threshold based on the ASCII code value of the file name of the second file, to enable an ASCII code value of a file name of a honeypot file determined based on the second file to be greater than or equal to the second ASCII code threshold, where the second ASCII code threshold is greater than the first ASCII code threshold.

The first ASCII code threshold may be greater than or equal to the ASCII code value of the file name of the first file. For example, the first ASCII code threshold is slightly greater than the ASCII code value of the file name of the first file. In this way, the honeypot file determined based on the first file is located near the first file when sorting is performed based on file names. If the attacker attacks the storage system in ascending order of ASCII code values of file names, the honeypot file can be attacked earlier, thereby improving efficiency of the ransomware attack detection. The second ASCII code threshold may be less than or equal to the ASCII code value of the file name of the second file. For example, the second ASCII code threshold is slightly less than the ASCII code value of the file name of the second file. In this way, the honeypot file determined based on the second file is located near the second file when sorting is performed based on the file names. If the attacker attacks the storage system in descending order of the ASCII code values of the file names, the honeypot file can be attacked earlier, thereby improving the efficiency of the ransomware attack detection.

For example, the ASCII code value of the file name of the honeypot file determined based on the first file is less than the ASCII code value of the file name of the first file, and the ASCII code value of the file name of the honeypot file determined based on the second file is greater than the ASCII code value of the file name of the second file. In this implementation, the one or more honeypot files generated by a computer device include the honeypot file whose file name has an ASCII code value less than the ASCII code value of the file name of the first file and/or the honeypot file whose file name has an ASCII code value greater than the ASCII code value of the file name of the second file. For example, an ASCII code value of a 1^{st} letter of the file name of the first file may be decreased by 1, to obtain a file name of a honeypot file, and an ASCII code value of a 1^{st} letter of the file name of the second file may be increased by 1, to obtain a file name of another honeypot file. In this implementation, after the generated honeypot file is deployed in the storage system, when all files in the storage system are sorted by file name, the honeypot file is always before or after the normal file. In this way, when the attacker performs a traversal attack on the storage system according to a file name sequence, the honeypot file is more likely to be attacked, thereby improving the efficiency of the ransomware attack detection and protecting the normal file to some extent.

Optionally, the file name of the honeypot file carries a preset sensitive word. The highly sensitive word is added to the file name of the honeypot file, to enable the honeypot file to be more deceptive. In this way, the honeypot file is more vulnerable to attacks than the normal file.

In another possible case, the second file feature includes the file size, and an implementation of generating the honeypot file corresponding to the target file type based on the second file feature of the file in the storage system includes: determining a file size of the one or more honeypot files based on a file size of a third file and/or a file size of a fourth file in the storage system, where the third file is a file occupying smallest space in the storage system, and the fourth file is a file occupying largest space in the storage system.

Optionally, an implementation of determining the file size of the one or more honeypot files based on the file size of the third file and/or the file size of the fourth file in the storage system includes: determining a first file size threshold based on the file size of the third file, to enable a file size of a honeypot file determined based on the third file to be less than or equal to the first file size threshold; and/or determining a second file size threshold based on the file size of the fourth file, to enable a file size of a honeypot file determined based on the fourth file to be greater than or equal to the second file size threshold, where the second file size threshold is greater than the first file size threshold.

The first file size threshold may be greater than or equal to the file size of the third file. For example, the first file size threshold is slightly greater than the file size of the third file. In this way, the honeypot file determined based on the third file is located near the third file when sorting is performed based on file sizes. If the attacker attacks the storage system in ascending order of file sizes, the honeypot file can be attacked earlier, thereby improving the efficiency of the ransomware attack detection. The second file size threshold may be less than or equal to the file size of the fourth file. For example, the second file size threshold is slightly less than the file size of the fourth file. In this way, the honeypot file determined based on the fourth file is located near the fourth file when sorting is performed based on the file sizes. If the attacker attacks the storage system in descending order of the file sizes, the honeypot file can be attacked earlier, thereby improving the efficiency of the ransomware attack detection.

For example, the file size of the honeypot file determined based on the third file is less than the file size of the third file, and the file size of the honeypot file determined based on the fourth file is greater than the file size of the fourth file. In this implementation, the one or more honeypot files generated by the computer device include the honeypot file whose file size is less than the file size of the third file and/or the honeypot file whose file size is greater than the file size of the fourth file. In this implementation, after the generated honeypot file is deployed in the storage system, when all the files in the storage system are sorted by file size, the honeypot file is always before or after the normal file. In this way, when the attacker performs a traversal attack on the storage system according to a file size sequence, the honeypot file is more likely to be attacked, thereby improving the efficiency of the ransomware attack detection and protecting the normal file to some extent.

In still another possible case, the second file feature includes the creation timestamp, and generating the honeypot file corresponding to the target file type based on the second file feature of the file in the storage system includes: determining a creation timestamp of the one or more honeypot files based on a creation timestamp of a fifth file and/or a creation timestamp of a sixth file in the storage system, where the fifth file is a file with earliest creation time in the storage system, and the sixth file is a file with latest creation time in the storage system.

Optionally, an implementation of determining the creation timestamp of the one or more honeypot files based on the creation timestamp of the fifth file and/or the creation timestamp of the sixth file in the storage system includes: determining a first timestamp threshold based on the creation timestamp of the fifth file, to enable a creation timestamp of a honeypot file determined based on the fifth file to be less than or equal to the first timestamp threshold; and/or determining a second timestamp threshold based on the creation timestamp of the sixth file, to enable a creation timestamp of a honeypot file determined based on the sixth file to be greater than or equal to the second timestamp threshold, where the second timestamp threshold is greater than the first timestamp threshold.

The first timestamp threshold may be greater than or equal to the creation timestamp of the fifth file. For example, the first timestamp threshold is slightly greater than the creation timestamp of the fifth file. In this way, the honeypot file determined based on the fifth file is located near the fifth file when sorting is performed based on creation timestamps. If the attacker attacks the storage system in ascending order of creation time, the honeypot file can be attacked earlier, thereby improving the efficiency of the ransomware attack detection. The second timestamp threshold may be greater than or equal to the creation timestamp of the sixth file. For example, the second timestamp threshold is slightly greater than the creation timestamp of the sixth file. In this way, the honeypot file determined based on the sixth file is located near the sixth file when sorting is performed based on the creation timestamps. If the attacker attacks the storage system in descending order of the creation time, the honeypot file can be attacked earlier, thereby improving the efficiency of the ransomware attack detection.

For example, the creation timestamp of the honeypot file determined based on the fifth file is less than the creation timestamp of the fifth file, and the creation timestamp of the honeypot file determined based on the sixth file is greater than the creation timestamp of the sixth file. In this implementation, the one or more honeypot files generated by the computer device include the honeypot file whose creation timestamp is less than the creation timestamp of the fifth file and/or the honeypot file whose creation timestamp is greater than the creation timestamp of the sixth file. In this implementation, after the generated honeypot file is deployed in the storage system, when all the files in the storage system are sorted by creation time, the honeypot file is always before or after the normal file. In this way, when the attacker performs a traversal attack on the storage system according to a creation timestamp sequence, the honeypot file is more likely to be attacked, thereby improving the efficiency of the ransomware attack detection and protecting the normal file to some extent.

In still another possible case, the second file feature includes the modification timestamp, and generating the honeypot file corresponding to the target file type based on the second file feature of the file in the storage system includes: determining a modification timestamp of the one or more honeypot files based on a modification timestamp of a seventh file and/or a modification timestamp of an eighth file in the storage system, where the seventh file is a file with earliest modification time in the storage system, and the eighth file is a file with latest modification time in the storage system.

Optionally, an implementation of determining the modification timestamp of the one or more honeypot files based on the modification timestamp of the seventh file and/or the modification timestamp of the eighth file in the storage system includes: determining a third timestamp threshold based on the modification timestamp of the seventh file, to enable a modification timestamp of a honeypot file determined based on the seventh file to be less than or equal to the third timestamp threshold; and/or determining a fourth timestamp threshold based on the modification timestamp of the eighth file, to enable a modification timestamp of a honeypot file determined based on the eighth file to be greater than or equal to the fourth timestamp threshold, where the fourth timestamp threshold is greater than the third timestamp threshold.

The third timestamp threshold may be greater than or equal to the modification timestamp of the seventh file. For example, the third timestamp threshold is slightly greater than the modification timestamp of the seventh file. In this way, the honeypot file determined based on the seventh file is located near the seventh file when sorting is performed based on modification timestamps. If the attacker attacks the storage system in ascending order of modification time, the honeypot file can be attacked earlier, thereby improving the efficiency of the ransomware attack detection. The fourth timestamp threshold may be less than or equal to the modification timestamp of the eighth file. For example, the fourth timestamp threshold is slightly less than the modification timestamp of the eighth file. In this way, the honeypot file determined based on the eighth file is located near the eighth file when sorting is performed based on the modification timestamps. If the attacker attacks the storage system in descending order of the modification time, the honeypot file can be attacked earlier, thereby improving the efficiency of the ransomware attack detection.

For example, the modification timestamp of the honeypot file determined based on the seventh file is less than the modification timestamp of the seventh file, and the modification timestamp of the honeypot file determined based on the eighth file is greater than the modification timestamp of the eighth file. In this implementation, the one or more honeypot files generated by the computer device include the honeypot file whose modification timestamp is less than the creation timestamp of the seventh file and/or the honeypot file whose modification timestamp is greater than the creation timestamp of the eighth file. In this implementation, after the generated honeypot file is deployed in the storage system, when all the files in the storage system are sorted by modification time, the honeypot file is always before or after the normal file. In this way, when the attacker performs a traversal attack on the storage system according to a modification timestamp sequence, the honeypot file is more likely to be attacked, thereby improving the efficiency of the ransomware attack detection and protecting the normal file to some extent.

Optionally, the target file type includes a text file type. An implementation of generating the honeypot file of the target file type includes: generating file content of a honeypot file of the text file type by using a natural language processing (natural language processing, NLP) model.

In this implementation, the file content of the honeypot file of the text file type is generated by using the NLP model, so that text content of the honeypot file has normal semantics. Therefore, the attacker cannot distinguish between the normal file and the honeypot file in the storage system by performing semantic recognition on file content, thereby improving the non-recognizability of the honeypot file and further improving the accuracy of the ransomware attack detection performed based on the honeypot file.

Optionally, an implementation of determining, based on the operation behavior for the one or more honeypot files, whether the storage system is under the ransomware attack includes: obtaining an operation sequence of a plurality of consecutive operations for the single honeypot file, where the plurality of consecutive operations include one or more of a read operation, a write operation, a rename operation, a create operation, or a remove operation; performing abnormal content detection on the honeypot file when the operation sequence matches a preset ransomware operation sequence pattern; and determining, based on a result of the abnormal content detection for the honeypot file, whether the honeypot file is under the ransomware attack.

In this implementation, multi-level ransomware detection that combines the abnormal operation pattern and the abnormal content detection is used, so as to provide timeliness of capturing the attack by using the honeypot file, and reduce a rate of a false positive caused by a misoperation of a normal user.

Optionally, another implementation of determining, based on the operation behavior for the one or more honeypot files, whether the storage system is under the ransomware attack includes: when a ratio of a quantity of honeypot files on which a first abnormal operation is performed to a quantity of the one or more honeypot files exceeds a first threshold, performing abnormal content detection on the honeypot file on which the first abnormal operation is performed, where the first abnormal operation includes a write operation and a rename operation; and determining, based on a result of the abnormal content detection for the honeypot file, whether the honeypot file is under the ransomware attack.

In this implementation, multi-level ransomware detection that combines abnormal touch and the abnormal content detection is used, so as to provide the timeliness of capturing the attack by using the honeypot file, and reduce the rate of the false positive caused by the misoperation of the normal user.

Optionally, an implementation of performing abnormal content detection on the honeypot file includes: performing content matching between current file content of the honeypot file and original file content of the honeypot file, to obtain a modification ratio of the current file content to the original file content. Correspondingly, an implementation of determining, based on the result of the abnormal content detection for the honeypot file, whether the honeypot file is under the ransomware attack includes: if the modification ratio of the current file content to the original file content of the honeypot file is greater than a modification threshold, determining that the honeypot file is under the ransomware attack.

Optionally, still another implementation of determining, based on the operation behavior for the one or more honeypot files, whether the storage system is under the ransomware attack includes: when a ratio of a quantity of honeypot files on which a second abnormal operation is performed to a quantity of the one or more honeypot files exceeds a second threshold, determining that the honeypot file on which the second abnormal operation is performed is under the ransomware attack, where the second abnormal operation includes a remove operation.

Optionally, after it is determined that the storage system is under the ransomware attack, an alarm prompt may be further output, where the alarm prompt indicates that the storage system is under the ransomware attack.

In this application, after it is determined that the storage system is under the ransomware attack, the alarm prompt may be output, so that operation and maintenance personnel or a user quickly locates an attacked object, and performs security protection on data to cope with the ransomware attack.

Optionally, the alarm prompt further includes a deployment location of the honeypot file under the ransomware attack in the storage system.

According to a second aspect, a ransomware attack detection apparatus is provided. The apparatus includes a plurality of function modules, and the plurality of function modules interact with each other to implement the method in the first aspect and the implementations of the first aspect. The plurality of function modules may be implemented based on software, hardware, or a combination of software and hardware, and the plurality of function modules may be randomly combined or divided based on specific implementation.

According to a third aspect, a computer device is provided, including a processor and a memory.

The memory is configured to store a computer program, and the computer program includes program instructions.

The processor is configured to invoke the computer program to implement the method in the first aspect and the implementations of the first aspect.

Optionally, the computer device is integrated into a storage system, or the computer device is in communication connection with the storage system.

According to a fourth aspect, a storage system is provided, including a controller and a storage medium. The storage medium is configured to store data, and the controller is configured to access the data in the storage medium, to perform the method in the first aspect and the implementations of the first aspect. Accessing the data includes reading data and writing data. Optionally, accessing the data further includes modifying data, deleting data, or the like.

Optionally, the storage system is a network attached storage (network attached storage, NAS) system.

According to a fifth aspect, a computer-readable storage medium is provided. The computer-readable storage medium stores instructions, and when the instructions are executed by a processor, the method in the first aspect and the implementations of the first aspect is implemented.

According to a sixth aspect, a computer program product is provided, including a computer program. When the computer program is executed by a processor, the method in the first aspect and the implementations of the first aspect is implemented.

According to a seventh aspect, a chip is provided. The chip includes a programmable logic circuit and/or program instructions. When the chip runs, the method in the first aspect and the implementations of the first aspect is implemented.

### BRIEF DESCRIPTION OF DRAWINGS

FIG. 1 is a diagram of an application architecture according to an embodiment of this application;
FIG. 2 is a diagram of another application architecture according to an embodiment of this application;
FIG. 3 is a diagram of an application scenario according to an embodiment of this application;
FIG. 4 is a schematic flowchart of a ransomware attack detection method according to an embodiment of this application;
FIG. 5 is a diagram of cluster analysis according to an embodiment of this application;
FIG. 6 is a diagram of a structure of a ransomware attack detection apparatus according to an embodiment of this application;
FIG. 7 is a diagram of a hardware structure of a computer device according to an embodiment of this application; and
FIG. 8 is a diagram of a structure of a storage system according to an embodiment of this application.

### DESCRIPTION OF EMBODIMENTS

To make the objectives, technical solutions, and advantages of this application clearer, the following further describes the implementations of this application in detail with reference to the accompanying drawings.

A ransomware attack is a malicious act that makes a computer or a specific file of a victim unavailable or unreadable. The victim may obtain a key used for recovering the computer or decrypting the encrypted file, only when the victim pays the ransom. After the ransomware attack, personal data and documents are lost, and even enterprise business operations are suspended and unsustainable. Building an anti-ransomware system to implement real-time security protection for user data is an important technical means in urgent need of the market currently, which has great market prospect and commercial value. The key to building the anti-ransomware system is how to effectively detect the ransomware attack in time.

Currently, all common means for detecting the ransomware attack are usually performing detection for attacked user data. In other words, after user data is tampered or encrypted, detection is performed based on the attacked user data. This detection means cannot protect integrity and security of the user data, and is a passive detection technology. How to build a proactive defense mechanism and proactively capture attackers is a current important development trend of data security protection in storage systems.

Based on this, this application proposes a storage system-oriented solution for proactively detecting a ransomware attack based on a honeypot file (honeypot file). A honeypot file technology is a security technology used for recognizing and capturing ransomware viruses. The honeypot file is a seemingly valuable normal file that is actually a deceptive file created by a security policy with no usable information, and is used for deceiving an attacker to perform attacks such as extortion, thereby enabling timely detection and capturing of the attacks. In the technical solution provided in this application, one or more honeypot files are generated based on a file feature of a file in a storage system, and then the generated honeypot file is deployed in the storage system, and whether the storage system is under a ransomware attack is further determined based on operation behavior for the deployed honeypot file. In this application, the honeypot file is deployed in the storage system, and the constructed honeypot file proactively deceives an attacker to perform a ransomware attack, to effectively detect the ransomware attack. Because the honeypot file is decoupled from the file, the ransomware attack on the honeypot file does not affect the normal file. Therefore, deployment of the honeypot file can reduce a possibility of the ransomware attack on the normal file to some extent. In addition, because the honeypot file is generated based on the file feature of the normal file in the storage system, the honeypot file can well simulate the normal file in the storage system, so that it is difficult for the attacker to identify the honeypot file, thereby improving reliability of ransomware attack detection.

Optionally, the file feature of the file includes one or more of a file size, a file name, a file type, a creation timestamp, or a modification timestamp. The creation timestamp indicates creation time of the file. The modification timestamp indicates latest modification time of the file. Performing a write operation, a remove operation, or a rename operation on a file is to modify the file, and the modification timestamp of the file is updated based on these operations. If a file is not modified after being created, a modification timestamp of the file is the same as a creation timestamp of the file. Generating the one or more honeypot files based on the file feature of the file in the storage system includes: determining one or more of a file type, a file name, a file size, a creation timestamp, or a modification timestamp of the honeypot file based on the file feature of the file in the storage system. For ease of description, in this application, a file feature that is used for determining the file type and that is in the file features is generally referred to as a first file feature, and a file feature that is used for determining the file name, the file size, the creation timestamp, and the modification timestamp and that is in the file features is generally referred to as a second file feature.

In some possible implementations, the file type of the honeypot file is determined based on the first file feature of the file in the storage system. The first file feature includes the file type. Optionally, the first file feature further includes one or more of the file name, the file size, the creation timestamp, or the modification timestamp.

In embodiments of this application, the file type of the honeypot file is determined based on the file feature including the file type, so that the generated honeypot file can better fit a user environment, and it is difficult for the attacker to distinguish between the normal file and the honeypot file in the storage system by using the file type, thereby improving non-recognizability of the honeypot file and further improving accuracy of the ransomware attack detection performed based on the honeypot file. In addition, in comparison with a solution in which a type of a honeypot file is preset, because the honeypot file of the fixed type is more easily recognized by a ransomware virus, once the ransomware virus chooses not to encrypt the file of this type, a ransomware detection solution based on the honeypot file becomes invalid, causing missing detection. In embodiments of this application, a type of a honeypot file is determined based on a file actually stored in the storage system. In other words, for different storage systems or file storage statuses of a same storage system at different moments, a type that is of a honeypot file and that fits a current user environment may be specifically determined, so that it is difficult for a generated honeypot file to be recognized by a ransomware virus, thereby improving reliability of ransomware attack detection.

In some possible implementations, the file name of the honeypot file is determined based on the file name of the file in the storage system. Optionally, the one or more honeypot files include a honeypot file whose file name has an ASCII code value less than an ASCII code value of a file name of a first file and/or a honeypot file whose file name has an ASCII code value greater than an ASCII code value of a file name of a second file. The first file is a file whose file name has a smallest ASCII code value in the storage system, and the second file is a file whose file name has a largest ASCII code value in the storage system.

In embodiments of this application, the file name of the honeypot file is determined based on the file name of the normal file in the storage system. After the honeypot file whose file name is designed in the foregoing manner is deployed in the storage system, when all files in the storage system are sorted by file name, the honeypot file is always before or after the normal file. In this way, when the attacker performs a traversal attack on the storage system according to a file name sequence, the honeypot file is more likely to be attacked, thereby improving efficiency of the ransomware attack detection and protecting the normal file to some extent.

In some possible implementations, the file size of the honeypot file is determined based on the file size of the file in the storage system. Optionally, the one or more honeypot files include a honeypot file whose file size is less than a file size of a third file and/or a honeypot file whose file size is greater than a file size of a fourth file. The third file is a file occupying smallest space in the storage system, and the fourth file is a file occupying largest space in the storage system.

In embodiments of this application, the file size of the honeypot file is determined based on the file size of the normal file in the storage system. After the honeypot file whose file size is designed in the foregoing manner is deployed in the storage system, when all the files in the storage system are sorted by file size, the honeypot file is always before or after the normal file. In this way, when the attacker performs a traversal attack on the storage system according to a file size sequence, the honeypot file is more likely to be attacked, thereby improving the efficiency of the ransomware attack detection and protecting the normal file to some extent.

In some possible implementations, the creation timestamp of the honeypot file is determined based on the creation timestamp of the file in the storage system. Optionally, the one or more honeypot files include a honeypot file whose creation timestamp is less than a creation timestamp of a fifth file and/or a honeypot file whose creation timestamp is greater than a creation timestamp of a sixth file. The fifth file is a file with earliest creation time in the storage system, and the sixth file is a file with latest creation time in the storage system.

In embodiments of this application, the creation timestamp of the honeypot file is determined based on the creation timestamp of the normal file in the storage system. After the honeypot file whose creation timestamp is designed in the foregoing manner is deployed in the storage system, when all the files in the storage system are sorted by creation time, the honeypot file is always before or after the normal file. In this way, when the attacker performs a traversal attack on the storage system according to a creation timestamp sequence, the honeypot file is more likely to be attacked, thereby improving the efficiency of the ransomware attack detection and protecting the normal file to some extent.

In some possible implementations, the modification timestamp of the honeypot file is determined based on the modification timestamp of the file in the storage system. Optionally, the one or more honeypot files include a honeypot file whose modification timestamp is less than a creation timestamp of a seventh file and/or a honeypot file whose modification timestamp is greater than a creation timestamp of an eighth file. The seventh file is a file with earliest modification time in the storage system, and the eighth file is a file with latest modification time in the storage system.

In embodiments of this application, the modification timestamp of the honeypot file is determined based on the modification timestamp of the normal file in the storage system. After the honeypot file whose modification timestamp is designed in the foregoing manner is deployed in the storage system, when all the files in the storage system are sorted by modification time, the honeypot file is always before or after the file. In this way, when the attacker performs a traversal attack on the storage system according to a modification timestamp sequence, the honeypot file is more likely to be attacked, thereby improving the efficiency of the ransomware attack detection and protecting the file to some extent.

In comparison with the solution in which a location of placing the honeypot file is fixed, once the ransomware virus successfully recognizes the location of placing the honeypot file, it may skip the honeypot file and perform a ransomware attack only on another file. In this case, the ransomware detection solution based on the honeypot file becomes invalid, causing missing detection. In embodiments of this application, a traversal access priority in a plurality of cases such as the file name sequence, the file size sequence, the creation timestamp sequence, and the modification timestamp sequence is analyzed, and the file name, the file size, the creation timestamp, and the modification timestamp of the honeypot file are separately designed. In this way, the placement location of placing the honeypot file does not need to be fixed, the honeypot file is included in normal file sorting, and the honeypot file can be preferentially traversed in different sorting cases, so that a possibility that the honeypot file is attacked is increased, and the efficiency of the ransomware attack detection is improved.

Optionally, the file type may be classified into a text file type, a video file format type, an audio file format type, an image file format type, or an executable file format type. Alternatively, the file type may be further classified. For example, the text file type may be classified into a Word document file, an Excel table file, a PDF reading file, a TXT text file, a PPT presentation document, or the like. Alternatively, the file type may be further classified. For example, the Word document file may be classified into a .doc file or a .docx file. A file type classification granularity is not limited in embodiments of this application. For example, in embodiments of this application, a file suffix type may be used as the file type.

In some possible implementations, for the honeypot file of the text file type, file content of the honeypot file is generated by using an NLP model. Optionally, one NLP model may be pre-trained. The NLP model corresponds to a plurality of text file suffix types. The file content output by the NLP model may be obtained by inputting the type of the honeypot file into the NLP model. Alternatively, a plurality of NLP models may be pre-trained. Each NLP model corresponds to one text file suffix type, and then an NLP model corresponding to the type of the honeypot file is selected to generate the file content of the honeypot file. Optionally, features such as the name of the honeypot file and the size of the honeypot file may be further used as inputs of the NLP model, to obtain file content that matches these file features.

In embodiments of this application, the file content of the honeypot file of the text file type is generated by using the NLP model, so that text content of the honeypot file has normal semantics. Therefore, the attacker cannot distinguish between the normal file and the honeypot file in the storage system by performing semantic recognition on file content, thereby improving the non-recognizability of the honeypot file and further improving the accuracy of the ransomware attack detection performed based on the honeypot file. In this way, even if a new ransomware virus emerges in the future, and can perform preliminary filtering on an attack target based on file content, the new ransomware virus cannot filter out the honeypot file with the normal semantics, thereby reducing a risk of missing detection. In addition, the NLP model is used for generating the file content that matches the file name and the file size of the honeypot file, instead of using a randomly generated character string or a description of the honeypot file (for example, "This is a honeypot file") as the file content of the honeypot file. This further improves difficulty in recognizing the honeypot file and improves the accuracy of the ransomware attack detection performed based on the honeypot file.

The following describes the technical solutions of this application in detail from a plurality of perspectives such as an architecture, a method procedure, a virtual apparatus, and a hardware apparatus.

The following describes a system in embodiments of this application by using an example.

The ransomware attack detection method provided in embodiments of this application may be applied to a storage product having a storage system. That is, a storage product having an anti-ransomware characteristic is provided. Alternatively, the ransomware attack detection method may be applied to an external security appliance product. That is, a service product having the anti-ransomware characteristic is provided.

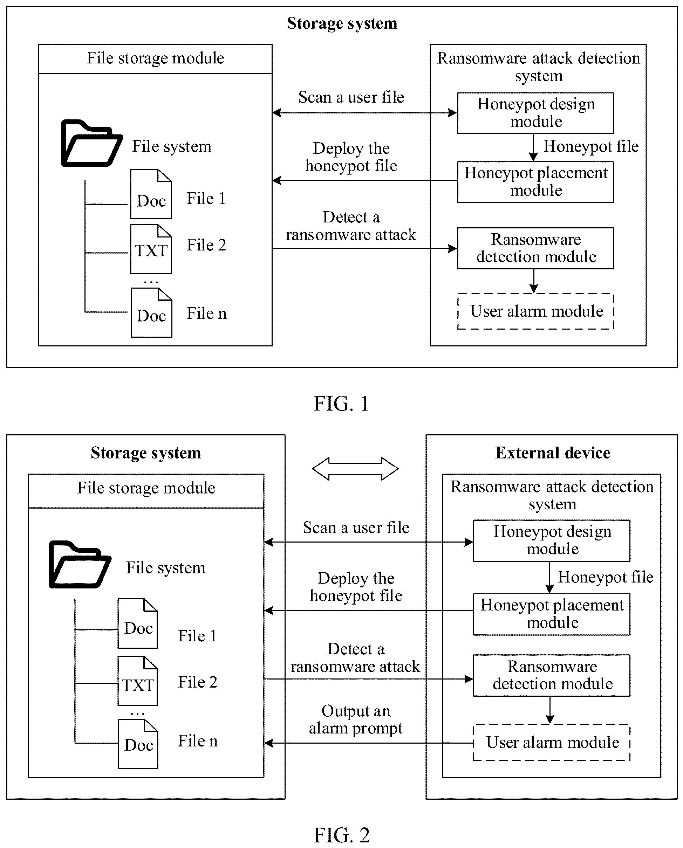

For example, FIG. 1 and FIG. 2 are respectively diagrams of application architectures according to embodiments of this application. As shown in FIG. 1 or FIG. 2, the application architecture includes a file storage module and a ransomware attack detection system. The ransomware attack detection system includes a honeypot design module, a honeypot placement module, and a ransomware detection module. The file storage module is deployed in a storage system. In the application architecture shown in FIG. 1, the ransomware attack detection system is deployed in the storage system. In the application architecture shown in FIG. 2, the ransomware attack detection system is deployed in an external device independent of the storage system.

The file storage module is configured to provide a file storage service for a user. As shown in FIG. 1 or FIG. 2, the file storage module includes one or more file systems. Each file system may store n files, where n is a positive integer.

The ransomware attack detection system is configured to perform the ransomware attack detection method provided in embodiments of this application. The honeypot design module is configured to scan the file in the file storage module, and generate a honeypot file based on a file feature of the file. For specific function implementation, refer to the following step 401. The honeypot placement module is configured to deploy the honeypot file in the file system of the file storage module. For specific function implementation, refer to the following step 402. The ransomware detection module is configured to detect operation behavior for the honeypot file, and determine whether the storage system is under a ransomware attack. For specific function implementation, refer to the following step 403.

Optionally, with reference to FIG. 1 or FIG. 2, the ransomware attack detection system further includes an alarm module. The alarm module is configured to output an alarm prompt after the storage system is under the ransomware attack. For specific function implementation, refer to the following step 404. In the application architecture shown in FIG. 2, the alarm module may output an alarm prompt to the storage system, and finally the storage system sends an alarm to notify operation and maintenance personnel that the storage system is under a ransomware attack. Alternatively, the ransomware attack detection system directly sends an alarm through the alarm module, to notify operation and maintenance personnel that the protected storage system is under a ransomware attack.

Optionally, in the application architecture shown in FIG. 1, the ransomware attack detection system may be deployed in the storage system in a container deployment manner. Alternatively, the ransomware attack detection system may be deployed in the storage system in a conventional deployment manner. For example, an application program is deployed in the storage system in a form of a plug-in or a script, and the storage system runs the application program by using an operating system, to implement ransomware attack detection.

Optionally, in the application architecture shown in FIG. 2, the ransomware attack detection system may be connected to the storage system through a peripheral component interconnect express (peripheral component interconnect express, PCIe) interface, so that the ransomware attack detection system can obtain the file feature of the file from the storage system through the PCIe interface, deploy the honeypot file to the storage system, obtain an access operation on the file from the storage system, and the like, to implement the ransomware attack detection on the storage system. The access operation on the file includes but is not limited to a read (read) operation, a write (write) operation, a rename (rename) operation, a create (create) operation, or a remove (remove) operation. The read operation is used for reading data from the file. The write operation is used for writing data to the file in an overwrite mode. The rename operation is used for renaming the file. The create operation is used for creating a new file to write new data. The remove operation is used for removing the file.

Optionally, the storage system is a NAS system. NAS is a device dedicated to file storage and sharing, and is connected to a local area network (local area network, LAN) and provides a file service through a network protocol. The NAS system usually includes a hardware device and software. The NAS system can provide highly efficient storage and data sharing functions. The NAS system can function as a file server, allowing a user to access a shared file stored in the NAS system over a network. The NAS system supports a plurality of file protocols, including but not limited to a network file system (network file system, NFS), a server message block (server message block, SMB) (SMB may also be referred to as a common internet file system (Common Internet File System, CIFS)), and a file transfer protocol (file transfer protocol, FTP). These file protocols allow file sharing and access between different operating systems and devices.

Optionally, the storage system in embodiments of this application may be a centralized storage system, or may be a distributed storage system.

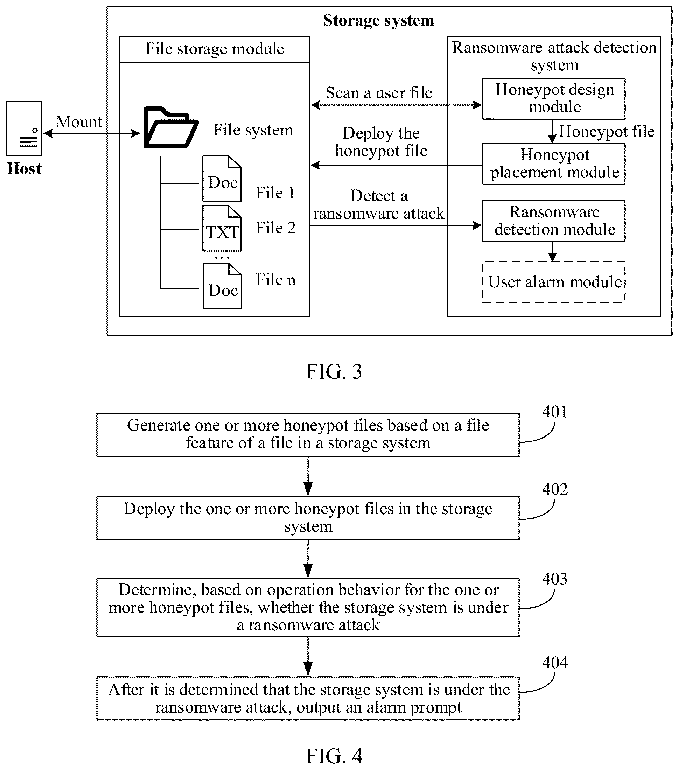

For example, FIG. 3 is a diagram of an application scenario according to an embodiment of this application. As shown in FIG. 3, the application scenario includes a host and a storage system. The host is a device used by a user to interact with the storage system. For example, the host may mount a file system to the storage system, and perform a file access operation on the mounted file system. Optionally, the host may be a physical device, or may be a virtual machine, a container, or the like deployed on the physical device. The storage system may be the storage system shown in FIG. 1 or the storage system shown in FIG. 2. In FIG. 3, an example in which the storage system is the storage system shown in FIG. 1 is used for description.

The following describes the method procedure in embodiments of this application by using an example.

For example, FIG. 4 is a schematic flowchart of a ransomware attack detection method according to an embodiment of this application. The method is applied to a computer device, and the computer device may be a device in any form that has a computing capability. The computer device may be, for example, the storage system shown in FIG. 1, the external device shown in FIG. 2, or the storage system shown in FIG. 3. As shown in FIG. 4, the method includes but is not limited to the following step 401 to step 403. Optionally, the method further includes the following step 404.

Step 401: Generate one or more honeypot files based on a file feature of a file in a storage system.

Optionally, a file feature of each scanned file is obtained by scanning the file in one or more file systems in the storage system. In this embodiment of this application, the computer device may provide an anti-ransomware function for a single file system in the storage system. For example, after a user subscribes to an anti-ransomware service for the storage system, the computer device may perform full scanning or partial scanning on a file of a file system mounted by the user to the storage system, to obtain a file feature of each scanned file, further generate a honeypot file fitting the file system, and then deploy the generated honeypot file in a root directory or any subdirectory of the file system. Alternatively, the computer device may provide the anti-ransomware function jointly for a plurality of file systems in the storage system. For example, the computer device may separately perform full scanning or partial scanning on files of the plurality of file systems mounted to the storage system, to obtain a file feature of each scanned file, further generate honeypot files fitting the plurality of file systems, and then respectively deploy the generated honeypot files in root directories or any subdirectory of the plurality of file systems. The full scanning refers to scanning all files in the file system. The partial scanning refers to scanning some files in the file system. For example, only a file in the latest directory (hottest directory) that a user accesses in the file system is scanned.

Optionally, the file feature includes one or more of a file size, a file name, a file type, a creation timestamp, or a modification timestamp.

Optionally, an implementation process of step 401 includes the following step 4011 and step 4012.

In step 4011, a target file type is determined based on a first file feature of the file in the storage system, where the first file feature includes a file type.

Optionally, if the target file type is determined only based on the file feature, that is, the file type of the file, statistics may be collected on file types of scanned files, and a file type that appears most frequently is used as the target file type.

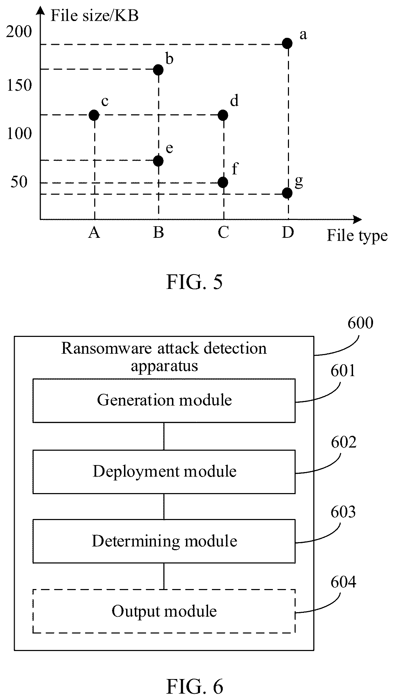

Optionally, the first file feature further includes one or more of the file name, the file size, the creation timestamp, or the modification timestamp. If the storage system includes a plurality of files, an implementation of determining the target file type based on the first file feature of the file in the storage system includes: performing, by using a clustering algorithm, cluster analysis on the plurality of files by using a plurality of features included in the first file feature as a plurality of clustering dimensions, to obtain one or more cluster center files; and using a file type of the one or more cluster center files as the target file type. For example, the first file feature includes the file type and the file size. FIG. 5 is a diagram of cluster analysis according to an embodiment of this application. As shown in FIG. 5, a horizontal coordinate and a vertical coordinate each represent a clustering dimension. The horizontal coordinate indicates a file type: a file type A, a file type B, a file type C, and a file type D separately. The vertical coordinate indicates a file size, in a unit of kilobyte (kilobyte, KB). A plurality of files are separately represented by using two file features: the file type and the file size, and each file may be represented as one point in a coordinate system. A total of seven files are shown in the figure, and are respectively represented by a, b, c, d, e, f, and g. A point (cluster center) located at a central location of a distribution area of the plurality of points represents a cluster center file. That is, the file d is the cluster center file. The clustering algorithm used herein includes but is not limited to a K-nearest neighbor (K-nearest neighbor, KNN) clustering algorithm or a K-means (K-means) clustering algorithm.

When cluster analysis is performed on the plurality of files by using the clustering algorithm, to obtain one cluster center file, the computer device uses a file type of the cluster center file as the target file type. When cluster analysis is performed on the plurality of files by using the clustering algorithm, to obtain a plurality of cluster center files, if file types of the plurality of cluster center files are the same, the file types of the plurality of cluster center files are used as the target file type; or if file types of the plurality of cluster center files are not completely the same, a plurality of file types of the plurality of cluster center files may be used as target file types, and then a honeypot file corresponding to each of the plurality of target file types is designed, or one of the file types may be randomly selected as the target file type.

In step 4012, a honeypot file of the target file type is generated.

For example, if the target file type is a Word document file, one or more Word document files are generated as honeypot files. Optionally, the computer device generates the honeypot file corresponding to the target file type based on a second file feature of the file in the storage system. The second file feature includes one or more of a file name, a file size, a creation timestamp, or a modification timestamp. Specifically, generating the honeypot file includes determining file attributes such as a file type, a file name, a file size, a creation timestamp, a modification timestamp, and file content of the honeypot file. The following embodiments of this application separately describe implementations of determining the file attributes of the honeypot file.

**A first implementation is used for determining the file name of the honeypot file.** The second file feature includes the file name, and the computer device determines the file name of the honeypot file based on the file name of the file in the storage system. In this case, an implementation of step 4012 includes: determining a file name of the one or more honeypot files based on the file name of a first file and/or the file name of a second file in the storage system, where the first file is a file whose file name has a smallest ASCII code value in the storage system, and the second file is a file whose file name has a largest ASCII code value in the storage system. Specifically, the computer device may determine a first ASCII code threshold based on the ASCII code value of the file name of the first file, to enable an ASCII code value of a file name of a honeypot file determined based on the first file to be less than or equal to the first ASCII code threshold; and/or determine a second ASCII code threshold based on the ASCII code value of the file name of the second file, to enable an ASCII code value of a file name of a honeypot file determined based on the second file to be greater than or equal to the second ASCII code threshold, where the second ASCII code threshold is greater than the first ASCII code threshold.

Optionally, the first ASCII code threshold is greater than or equal to the ASCII code value of the file name of the first file. For example, the first ASCII code threshold is slightly greater than the ASCII code value of the file name of the first file. In this way, the honeypot file determined based on the first file is located near the first file when sorting is performed based on file names. If an attacker attacks the storage system in ascending order of ASCII code values of file names, the honeypot file can be attacked earlier, thereby improving efficiency of the ransomware attack detection.

Optionally, the second ASCII code threshold is less than or equal to the ASCII code value of the file name of the second file. For example, the second ASCII code threshold is slightly less than the ASCII code value of the file name of the second file. In this way, the honeypot file determined based on the second file is located near the second file when sorting is performed based on the file names. If the attacker attacks the storage system in descending order of the ASCII code values of the file names, the honeypot file can be attacked earlier, thereby improving the efficiency of the ransomware attack detection.

For example, the ASCII code value of the file name of the honeypot file determined based on the first file is less than the ASCII code value of the file name of the first file, and the ASCII code value of the file name of the honeypot file determined based on the second file is greater than the ASCII code value of the file name of the second file. In this implementation, the one or more honeypot files generated by the computer device include the honeypot file whose file name has an ASCII code value less than the ASCII code value of the file name of the first file and/or the honeypot file whose file name has an ASCII code value greater than the ASCII code value of the file name of the second file. For example, an ASCII code value of a 1^{st} letter of the file name of the first file may be decreased by 1, to obtain a file name of a honeypot file, and an ASCII code value of a 1^{st} letter of the file name of the second file may be increased by 1, to obtain a file name of another honeypot file. In this implementation, after the generated honeypot file is deployed in the storage system, when all the files in the storage system are sorted by file name, the honeypot file is always before or after the normal file. In this way, when the attacker performs a traversal attack on the storage system according to a file name sequence, the honeypot file is more likely to be attacked, thereby improving the efficiency of the ransomware attack detection and protecting the normal file to some extent.

Optionally, the file name of the honeypot file carries a preset sensitive word. The preset sensitive word is a sensitive word that is vulnerable to an attack, including but not limited to "private", "cash", "bill", and the like. The preset sensitive word can be set according to expert experience or a historical attack condition. The highly sensitive word is added to the file name of the honeypot file, to enable the honeypot file to be more deceptive. In this way, the honeypot file is more vulnerable to attacks than the normal file.

**A second implementation is used for determining the file size of the honeypot file.** The second file feature includes the file size, and the computer device determines the file size of the honeypot file based on the file size of the file in the storage system. In this case, an implementation of step 4012 includes: determining a file size of the one or more honeypot files based on a file size of a third file and/or a file size of a fourth file in the storage system, where the third file is a file occupying smallest space in the storage system, and the fourth file is a file occupying largest space in the storage system. Specifically, the computer device may determine a first file size threshold based on the file size of the third file, to enable a file size of a honeypot file determined based on the third file to be less than or equal to the first file size threshold; and/or determine a second file size threshold based on the file size of the fourth file, to enable a file size of a honeypot file determined based on the fourth file to be greater than or equal to the second file size threshold, where the second file size threshold is greater than the first file size threshold.

Optionally, the first file size threshold is greater than or equal to the file size of the third file. For example, the first file size threshold is slightly greater than the file size of the third file. In this way, the honeypot file determined based on the third file is located near the third file when sorting is performed based on file sizes. If the attacker attacks the storage system in ascending order of file sizes, the honeypot file can be attacked earlier, thereby improving the efficiency of the ransomware attack detection.

Optionally, the second file size threshold is less than or equal to the file size of the fourth file. For example, the second file size threshold is slightly less than the file size of the fourth file. In this way, the honeypot file determined based on the fourth file is located near the fourth file when sorting is performed based on the file sizes. If the attacker attacks the storage system in descending order of the file sizes, the honeypot file can be attacked earlier, thereby improving the efficiency of the ransomware attack detection.

For example, the file size of the honeypot file determined based on the third file is less than the file size of the third file, and the file size of the honeypot file determined based on the fourth file is greater than the file size of the fourth file. In this implementation, the one or more honeypot files generated by the computer device include the honeypot file whose file size is less than the file size of the third file and/or the honeypot file whose file size is greater than the file size of the fourth file. In this implementation, after the generated honeypot file is deployed in the storage system, when all the files in the storage system are sorted by file size, the honeypot file is always before or after the normal file. In this way, when the attacker performs a traversal attack on the storage system according to a file size sequence, the honeypot file is more likely to be attacked, thereby improving the efficiency of the ransomware attack detection and protecting the normal file to some extent.

**A third implementation is used for determining the creation timestamp of the honeypot file.** The second file feature includes the creation timestamp, and the computer device determines the creation timestamp of the honeypot file based on the creation time of the file in the storage system. In this case, an implementation of step 4012 includes: determining a creation timestamp of the one or more honeypot files based on a creation timestamp of a fifth file and/or a creation timestamp of a sixth file in the storage system, where the fifth file is a file with earliest creation time in the storage system, and the sixth file is a file with latest creation time in the storage system. Specifically, the computer device may determine a first timestamp threshold based on the creation timestamp of the fifth file, to enable a creation timestamp of a honeypot file determined based on the fifth file to be less than or equal to the first timestamp threshold; and/or determine a second timestamp threshold based on the creation timestamp of the sixth file, to enable a creation timestamp of a honeypot file determined based on the sixth file to be greater than or equal to the second timestamp threshold, where the second timestamp threshold is greater than the first timestamp threshold.

Optionally, the first timestamp threshold is greater than or equal to the creation timestamp of the fifth file. For example, the first timestamp threshold is slightly greater than the creation timestamp of the fifth file. In this way, the honeypot file determined based on the fifth file is located near the fifth file when sorting is performed based on creation timestamps. If the attacker attacks the storage system in ascending order of creation time, the honeypot file can be attacked earlier, thereby improving the efficiency of the ransomware attack detection.

Optionally, the second timestamp threshold is greater than or equal to the creation timestamp of the sixth file. For example, the second timestamp threshold is slightly greater than the creation timestamp of the sixth file. In this way, the honeypot file determined based on the sixth file is located near the sixth file when sorting is performed based on the creation timestamps. If the attacker attacks the storage system in descending order of the creation time, the honeypot file can be attacked earlier, thereby improving the efficiency of the ransomware attack detection.

For example, the creation timestamp of the honeypot file determined based on the fifth file is less than the creation timestamp of the fifth file, and the creation timestamp of the honeypot file determined based on the sixth file is greater than the creation timestamp of the sixth file. In this implementation, the one or more honeypot files generated by the computer device include the honeypot file whose creation timestamp is less than the creation timestamp of the fifth file and/or the honeypot file whose creation timestamp is greater than the creation timestamp of the sixth file. In this implementation, after the generated honeypot file is deployed in the storage system, when all the files in the storage system are sorted by creation time, the honeypot file is always before or after the normal file. In this way, when the attacker performs a traversal attack on the storage system according to a creation timestamp sequence, the honeypot file is more likely to be attacked, thereby improving the efficiency of the ransomware attack detection and protecting the normal file to some extent.

**A fourth implementation is used for determining the modification timestamp of the honeypot file.** The second file feature includes the modification timestamp, and the computer device determines the modification timestamp of the honeypot file based on the modification time of the file in the storage system. In this case, an implementation of step 4012 includes: determining a modification timestamp of the one or more honeypot files based on a modification timestamp of a seventh file and/or a modification timestamp of an eighth file in the storage system, where the seventh file is a file with earliest modification time in the storage system, and the eighth file is a file with latest modification time in the storage system. Specifically, the computer device may determine a third timestamp threshold based on the modification timestamp of the seventh file, to enable a modification timestamp of a honeypot file determined based on the seventh file to be less than or equal to the third timestamp threshold; and/or determine a fourth timestamp threshold based on the modification timestamp of the eighth file, to enable a modification timestamp of a honeypot file determined based on the eighth file to be greater than or equal to the fourth timestamp threshold, where the fourth timestamp threshold is greater than the third timestamp threshold.

Optionally, the third timestamp threshold is greater than or equal to the modification timestamp of the seventh file. For example, the third timestamp threshold is slightly greater than the modification timestamp of the seventh file. In this way, the honeypot file determined based on the seventh file is located near the seventh file when sorting is performed based on modification timestamps. If the attacker attacks the storage system in ascending order of modification time, the honeypot file can be attacked earlier, thereby improving the efficiency of the ransomware attack detection.

Optionally, the fourth timestamp threshold is less than or equal to the modification timestamp of the eighth file. For example, the fourth timestamp threshold is slightly less than the modification timestamp of the eighth file. In this way, the honeypot file determined based on the eighth file is located near the eighth file when sorting is performed based on the modification timestamps. If the attacker attacks the storage system in descending order of the modification time, the honeypot file can be attacked earlier, thereby improving the efficiency of the ransomware attack detection.

For example, the modification timestamp of the honeypot file determined based on the seventh file is less than the modification timestamp of the seventh file, and the modification timestamp of the honeypot file determined based on the eighth file is greater than the modification timestamp of the eighth file. In this implementation, the one or more honeypot files generated by the computer device include the honeypot file whose modification timestamp is less than the creation timestamp of the seventh file and/or the honeypot file whose modification timestamp is greater than the creation timestamp of the eighth file. In this implementation, after the generated honeypot file is deployed in the storage system, when all the files in the storage system are sorted by modification time, the honeypot file is always before or after the normal file. In this way, when the attacker performs a traversal attack on the storage system according to a modification timestamp sequence, the honeypot file is more likely to be attacked, thereby improving the efficiency of the ransomware attack detection and protecting the normal file to some extent.

**A fifth implementation is used for generating the file content of the honeypot file.** Optionally, the target file type includes a text file type, and the computer device may generate file content of a honeypot file of the text file type by using an NLP model.

Optionally, one NLP model may be pre-trained. The NLP model corresponds to a plurality of text file suffix types. The file content output by the NLP model may be obtained by inputting the type of the honeypot file into the NLP model. Alternatively, a plurality of NLP models may be pre-trained. Each NLP model corresponds to one text file suffix type, and then an NLP model corresponding to the type of the honeypot file is selected to generate the file content of the honeypot file. Optionally, features such as the name of the honeypot file and the size of the honeypot file may be further used as inputs of the NLP model, to obtain file content that matches these file features. The computer device may further use the name that is of the honeypot file and that is determined in the first implementation and the size that is of the honeypot file and that is determined in the second implementation as inputs of the NLP model, to obtain text file content that matches the name of the honeypot file and the size of the honeypot file. In this implementation, the file content of the honeypot file of the text file type is generated by using the NLP model, so that text content of the honeypot file has normal semantics. Therefore, the attacker cannot distinguish between the normal file and the honeypot file in the storage system by performing semantic recognition on file content, thereby improving non-recognizability of the honeypot file and further improving accuracy of the ransomware attack detection performed based on the honeypot file.

Optionally, the computer device may pre-store a video library, an audio library, and a picture library. When the target file type includes a video file format type, an audio file format type, or a picture file format type, the computer device separately obtains file content from a corresponding database.

Step 402: Deploy the one or more honeypot files in the storage system.

Optionally, the one or more honeypot files are deployed in one or more file systems mounted to the storage system. For example, all generated honeypot files may be separately deployed in each file system, or the generated honeypot files may be deployed in a plurality of file systems in a distributed mode. The honeypot file can be deployed in a root directory of the file system or any subdirectory of the file system. A deployment manner and a deployment location of the honeypot file in the storage system are not limited in this embodiment of this application.

Step 403: Determine, based on operation behavior for the one or more honeypot files, whether the storage system is under a ransomware attack.

A normal user may perform a misoperation on the honeypot file in the storage system, for example, perform a read operation, a write operation, or the like on the honeypot file. To reduce a rate of a false positive of the ransomware attack, a case in which an alarm is generated once the honeypot file is triggered should be avoided. Based on this concept, this embodiment of this application provides the following three implementations to determine whether the operation on the honeypot file is the ransomware attack.

In a first possible implementation, an implementation process of step 403 includes: obtaining an operation sequence of a plurality of consecutive operations for the single honeypot file, where the plurality of consecutive operations include one or more of a read operation, a write operation, a rename operation, a create operation, or a remove operation; performing abnormal content detection on the honeypot file when the operation sequence matches a preset ransomware operation sequence pattern; and determining, based on a result of the abnormal content detection for the honeypot file, whether the honeypot file is under the ransomware attack.

Optionally, the ransomware operation sequence may be obtained based on an actual ransomware behavior of a ransomware. One ransomware behavior usually includes a plurality of consecutive operations, for example, "read operation+write operation+rename operation", "read operation+rename operation+write operation", "create operation+read operation+write operation+remove operation", and "read operation+create operation+write operation+remove operation", on a same group of data. A ransomware operation sequence may be generated and stored in advance based on the possible ransomware behavior. That the operation sequence of the plurality of consecutive operations matches the preset ransomware operation sequence pattern may be that the operation sequence includes any one of preset ransomware operation sequences.

In this implementation, multi-level ransomware detection that combines the abnormal operation pattern and the abnormal content detection is used, so as to provide timeliness of capturing the attack by using the honeypot file, and reduce a rate of a false positive caused by the misoperation of the normal user. Alternatively, when the operation sequence of the plurality of consecutive operations for the honeypot file matches the preset ransomware operation sequence pattern, the computer device may directly determine that the honeypot file is under the ransomware attack.

In a second possible implementation, an implementation process of step 403 includes: when a ratio of a quantity of honeypot files on which a first abnormal operation is performed to a quantity of all the honeypot files deployed in the storage system exceeds a first threshold, performing abnormal content detection on the honeypot file on which the first abnormal operation is performed, where the first abnormal operation includes a write operation and a rename operation; and determining, based on a result of the abnormal content detection for the honeypot file, whether the honeypot file is under the ransomware attack. For example, if a quantity of honeypot files with "write operation" and "rename operation" exceeds 10% of the total quantity of honeypot files deployed in the storage system, abnormal content detection is performed on the related honeypot file.

In this implementation, multi-level ransomware detection that combines abnormal touch and the abnormal content detection is used, so as to provide the timeliness of capturing the attack by using the honeypot file, and reduce the rate of the false positive caused by the misoperation of the normal user. Alternatively, when the ratio of the quantity of honeypot files on which the first abnormal operation is performed to the quantity of all the honeypot files deployed in the storage system exceeds the first threshold, the computer device may directly determine that the related honeypot file is under the ransomware attack.

In the first possible implementation or the second possible implementation, an implementation of performing abnormal content detection on the honeypot file includes: performing content matching between current file content of the honeypot file and original file content of the honeypot file, to obtain a modification ratio of the current file content to the original file content. If the modification ratio is greater than a modification threshold, it is determined that the honeypot file is under the ransomware attack. Then, it is determined that the storage system is under the ransomware attack. Optionally, matching may be performed between the current file content and the original file content of the honeypot file by using a string matching algorithm or an edit distance algorithm. If the modification ratio exceeds 10%, it is determined that the honeypot file is under the ransomware attack, and then it is determined that the storage system is under the ransomware attack.

In a third possible implementation, an implementation process of step 403 includes: when a ratio of a quantity of honeypot files on which a second abnormal operation is performed to a quantity of all the honeypot files deployed in the storage system exceeds a second threshold, determining that the honeypot file on which the second abnormal operation is performed is under the ransomware attack, and then determining that the storage system is under the ransomware attack, where the second abnormal operation includes a remove operation. For example, when a quantity of honeypot files with "remove operation" exceeds 10% of the total quantity of honeypot files deployed in the storage system, it is determined that the storage system is under the ransomware attack.

Step 404: After it is determined that the storage system is under the ransomware attack, output an alarm prompt.

The alarm prompt indicates that the storage system is under the ransomware attack. Optionally, the alarm prompt further includes a deployment location of the honeypot file under the ransomware attack in the storage system. The deployment location can be expressed in a format of "file system+file path name+file name".

Optionally, that the computer device outputs the alarm prompt may be that the computer device displays the alarm prompt, or may be that the computer device sends the alarm prompt to another display device for display by the another display device.

In this embodiment of this application, after determining that the storage system is under the ransomware attack, the computer device may output the alarm prompt, so that operation and maintenance personnel or a user quickly locates an attacked object, and performs security protection on data to cope with the ransomware attack.

In the ransomware attack detection method provided in this embodiment of this application, the one or more honeypot files are generated based on the file feature of the file in the storage system, and then the generated honeypot file is deployed in the storage system, and whether the storage system is under the ransomware attack is further determined based on the operation behavior for the deployed honeypot file. In this embodiment of this application, the honeypot file is deployed in the storage system, and the constructed honeypot file proactively deceives the attacker to perform the ransomware attack, to effectively detect the ransomware attack. Because the honeypot file is decoupled from the normal file, the ransomware attack on the honeypot file does not affect the normal file. Therefore, deployment of the honeypot file can reduce a possibility of the ransomware attack on the normal file to some extent. In addition, because the honeypot file is generated based on the file feature of the normal file in the storage system, the honeypot file can well simulate the normal file of the user in the storage system, so that it is difficult for the attacker to identify the honeypot file, thereby improving reliability of the ransomware attack detection.

A sequence of the steps of the ransomware attack detection method provided in this embodiment of this application can be properly adjusted, and the steps can also be correspondingly added or deleted based on a situation. Any method variation readily figured out by a person skilled in the art within the technical scope disclosed in this application shall fall within the protection scope of this application. For example, based on an inventive concept of embodiments of this application, a manner of deploying a honeypot to lure an attack may be applied to another field related to information security storage or information security transmission, for example, the communication field or the internet of things field. In specific application, an inventive idea of this application may be used for designing a honeypot fitting a normal environment, to detect a plurality of attacks including the ransomware attack. For example, the internet of things is vulnerable to a distributed denial of service (distributed denial of service, DDoS) attack. A node fitting the normal environment is designed as a honeypot to monitor some access information of the node. If a large-scale abnormal access pattern occurs, it indicates that the DDoS attack occurs. Details are not described herein in this embodiment of this application.

The following describes a virtual apparatus in embodiments of this application by using an example.

For example, FIG. 6 is a diagram of a structure of a ransomware attack detection apparatus according to an embodiment of this application. As shown in FIG. 6, the ransomware attack detection apparatus 600 includes but is not limited to a generation module 601, a deployment module 602, and a determining module 603. Optionally, the ransomware attack detection apparatus 600 further includes an output module 604. The ransomware attack detection apparatus 600 may be specifically configured to perform the method shown in FIG. 4. For example, the generation module 601 is configured to perform step 401, the deployment module 602 is configured to perform step 402, the determining module 603 is configured to perform step 403, and the output module 604 is configured to perform step 404.

The generation module 601 is configured to generate one or more honeypot files based on a file feature of a file in a storage system.

The deployment module 602 is configured to deploy the one or more honeypot files in the storage system.

The determining module 603 is configured to determine, based on operation behavior for the one or more honeypot files, whether the storage system is under a ransomware attack.

Optionally, the generation module 601 is configured to: determine a target file type based on a first file feature of the file in the storage system, where the first file feature includes a file type; and generate a honeypot file of the target file type.

Optionally, the first file feature further includes one or more of a file name, a file size, a creation timestamp, or a modification timestamp.

Optionally, the storage system includes a plurality of files, and the generation module 601 is configured to: perform, by using a clustering algorithm, cluster analysis on the plurality of files by using a plurality of features included in the first file feature as a plurality of clustering dimensions, to obtain one or more cluster center files; and use a file type of the one or more cluster center files as the target file type.

Optionally, the generation module 601 is configured to generate the honeypot file of the target file type based on a second file feature of the file in the storage system, where the second file feature includes one or more of a file name, a file size, a creation timestamp, or a modification timestamp.

Optionally, the second file feature includes the file name, and the generation module 601 is configured to determine a file name of the one or more honeypot files based on a file name of a first file and/or a file name of a second file in the storage system, where the first file is a file whose file name has a smallest ASCII code value in the storage system, and the second file is a file whose file name has a largest ASCII code value in the storage system.

Optionally, the generation module 601 is configured to: determine a first ASCII code threshold based on the ASCII code value of the file name of the first file, to enable an ASCII code value of a file name of a honeypot file determined based on the first file to be less than or equal to the first ASCII code threshold; and/or determine a second ASCII code threshold based on the ASCII code value of the file name of the second file, to enable an ASCII code value of a file name of a honeypot file determined based on the second file to be greater than or equal to the second ASCII code threshold, where the second ASCII code threshold is greater than the first ASCII code threshold.

Optionally, the second file feature includes the file size, and the generation module 601 is configured to determine a file size of the one or more honeypot files based on a file size of a third file and/or a file size of a fourth file in the storage system, where the third file is a file occupying smallest space in the storage system, and the fourth file is a file occupying largest space in the storage system.

Optionally, the generation module 601 is configured to: determine a first file size threshold based on the file size of the third file, to enable a file size of a honeypot file determined based on the third file to be less than or equal to the first file size threshold; and/or determine a second file size threshold based on the file size of the fourth file, to enable a file size of a honeypot file determined based on the fourth file to be greater than or equal to the second file size threshold, where the second file size threshold is greater than the first file size threshold.

Optionally, the second file feature includes the creation timestamp, and the generation module 601 is configured to determine a creation timestamp of the one or more honeypot files based on a creation timestamp of a fifth file and/or a creation timestamp of a sixth file in the storage system, where the fifth file is a file with earliest creation time in the storage system, and the sixth file is a file with latest creation time in the storage system.

Optionally, the generation module 601 is configured to: determine a first timestamp threshold based on the creation timestamp of the fifth file, to enable a creation timestamp of a honeypot file determined based on the fifth file to be less than or equal to the first timestamp threshold; and/or determine a second timestamp threshold based on the creation timestamp of the sixth file, to enable a creation timestamp of a honeypot file determined based on the sixth file to be greater than or equal to the second timestamp threshold, where the second timestamp threshold is greater than the first timestamp threshold.

Optionally, the second file feature includes the modification timestamp, and the generation module 601 is configured to determine a modification timestamp of the one or more honeypot files based on a modification timestamp of a seventh file and/or a modification timestamp of an eighth file in the storage system, where the seventh file is a file with earliest modification time in the storage system, and the eighth file is a file with latest modification time in the storage system.

Optionally, the generation module 601 is configured to: determine a third timestamp threshold based on the modification timestamp of the seventh file, to enable a modification timestamp of a honeypot file determined based on the seventh file to be less than or equal to the third timestamp threshold; and/or determine a fourth timestamp threshold based on the modification timestamp of the eighth file, to enable a modification timestamp of a honeypot file determined based on the eighth file to be greater than or equal to the fourth timestamp threshold, where the fourth timestamp threshold is greater than the third timestamp threshold.

Optionally, the target file type includes a text file type, and the generation module 601 is configured to generate file content of a honeypot file of the text file type by using a natural language processing model.

Optionally, the file name of the honeypot file carries a preset sensitive word.

Optionally, the determining module 603 is configured to: obtain an operation sequence of a plurality of consecutive operations for the single honeypot file, where the plurality of consecutive operations include one or more of a read operation, a write operation, a rename operation, a create operation, or a remove operation; perform abnormal content detection on the honeypot file when the operation sequence matches a preset ransomware operation sequence pattern; and determine, based on a result of the abnormal content detection for the honeypot file, whether the honeypot file is under the ransomware attack.

Optionally, the determining module 603 is configured to: when a ratio of a quantity of honeypot files on which a first abnormal operation is performed to a quantity of the one or more honeypot files exceeds a first threshold, perform abnormal content detection on the honeypot file on which the first abnormal operation is performed, where the first abnormal operation includes a write operation and a rename operation; and determine, based on a result of the abnormal content detection for the honeypot file, whether the honeypot file is under the ransomware attack.

Optionally, the determining module 603 is configured to: perform content matching between current file content of the honeypot file and original file content of the honeypot file, to obtain a modification ratio of the current file content to the original file content; and if the modification ratio is greater than a modification threshold, determine that the honeypot file is under the ransomware attack.

Optionally, the determining module 603 is configured to: when a ratio of a quantity of honeypot files on which a second abnormal operation is performed to a quantity of the one or more honeypot files exceeds a second threshold, determine that the honeypot file on which the second abnormal operation is performed is under the ransomware attack, where the second abnormal operation includes a remove operation.

Optionally, the output module 604 is configured to: after determining that the storage system is under the ransomware attack, output an alarm prompt, where the alarm prompt indicates that the storage system is under the ransomware attack.

Optionally, the alarm prompt further includes a deployment location of the honeypot file under the ransomware attack in the storage system.

For the apparatus in the foregoing embodiment, specific manners of executing operations by each module are described in detail in embodiments related to the method, and details are not described herein.

The following describes a basic hardware structure in embodiments of this application by using an example.

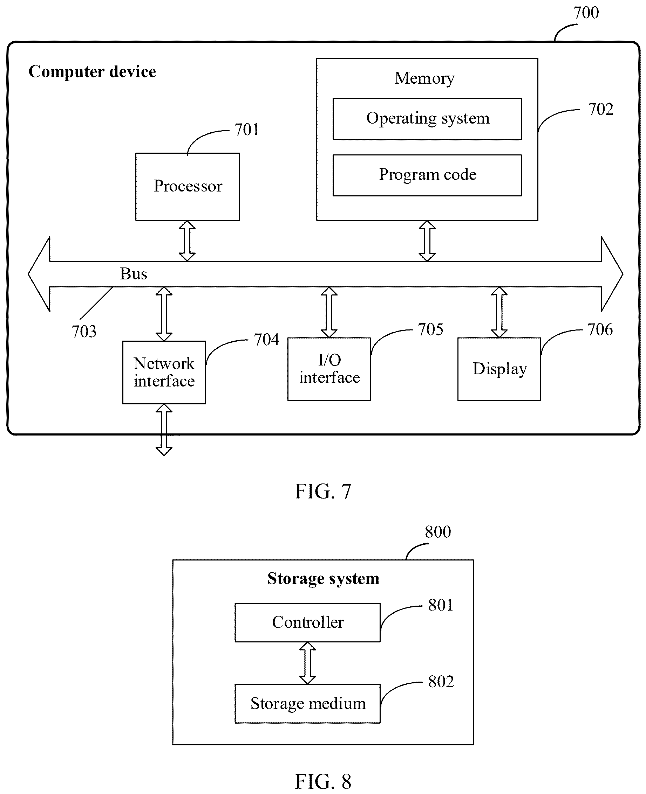

For example, FIG. 7 is a diagram of a hardware structure of a computer device according to an embodiment of this application. As shown in FIG. 7, the computer device 700 includes a processor 701 and a memory 702, and the memory 701 and the memory 702 are connected through a bus 703. FIG. 7 is described by using an example in which the processor 701 and the memory 702 are independent of each other. Optionally, the processor 701 and the memory 702 are integrated together. The computer device 700 may be, for example, a storage system. The computer device 700 is integrated into the storage system, or the computer device 700 is in communication connection with the storage system.

The memory 702 is configured to store a computer program, and the computer program includes an operating system and program code. The memory 702 is a storage medium of various types, for example, a read-only memory (read-only memory, ROM), a random access memory (random access memory, RAM), an electrically erasable programmable read-only memory (electrically erasable programmable read-only memory, EEPROM), a compact disc read-only memory (compact disc read-only memory, CD-ROM), a flash memory, an optical memory, a register, a compact disk storage, an optical disc storage, a magnetic disk, or another magnetic storage device.

The processor 701 is a general-purpose processor or a dedicated processor. The processor 701 may be a single-core processor or a multi-core processor. The processor 701 includes at least one circuit, to perform the ransomware attack detection method provided in embodiments of this application.

Optionally, the computer device 700 further includes a network interface 704, and the network interface 704 is connected to the processor 701 and the memory 702 through the bus 703. The network interface 704 can implement communication between the computer device 700 and another device.

Optionally, the computer device 700 further includes an input/output (input/output, I/O) interface 705, and the I/O interface 705 is connected to the processor 701 and the memory 702 through the bus 703. The processor 701 can receive an input command, data, or the like through the I/O interface 705. The I/O interface 705 is configured to connect the computer device 700 to an input device, where the input device is, for example, a keyboard or a mouse. Optionally, in some possible scenarios, the foregoing network interface 704 and the I/O interface 705 are collectively referred to as a communication interface.

Optionally, the computer device 700 further includes a display 706, and the display 706 is connected to the processor 701 and the memory 702 through the bus 703. The display 706 can be configured to display an intermediate result, a final result, and/or the like generated by the processor 701 by performing the foregoing method, for example, display an alarm prompt. In a possible implementation, the display 706 is a touchscreen, to provide a human-machine interaction interface.

The bus 703 is a communication bus of any type configured to implement interconnection between internal components of the computer device 700, for example, a system bus. In this embodiment of this application, an example in which the foregoing internal components of the computer device 700 are interconnected through the bus 703 is used for description. Optionally, communication connection between the foregoing internal components of the computer device 700 is implemented in another connection manner other than the bus 703. For example, the foregoing internal components of the computer device 700 are interconnected through a logical interface inside the computer device 700.

The foregoing components may be separately disposed on chips that are independent of each other, or at least some or all of the components may be disposed on a same chip. Whether the components are separately disposed on different chips or integrated and disposed on one or more chips usually depends on a requirement of a product design. This embodiment of this application imposes no limitation on specific implementations of the foregoing components.

The computer device 700 shown in FIG. 7 is merely an example. In an implementation process, the computer device 700 may further include other components, which are not listed one by one in this specification. The computer device 700 shown in FIG. 7 may perform all or some steps of the method (for example, the ransomware attack detection method corresponding to FIG. 4) provided in the foregoing embodiment, to implement ransomware attack detection on the storage system.

An embodiment of this application further provides a storage system. For example, FIG. 8 is a diagram of a structure of a storage system according to an embodiment of this application. As shown in FIG. 8, the storage system 800 includes a controller 801 and a storage medium 802. The storage medium 802 is configured to store data. The controller 801 is configured to: access data in the storage medium, and perform all or some steps of the method (for example, the ransomware attack detection method corresponding to FIG. 4) provided in the foregoing embodiment, to implement ransomware attack detection. Optionally, accessing the data includes but is not limited to reading data and writing data. For example, the controller 801 reads a file from the storage medium, and writes a honeypot file into the storage medium. Accessing the data may further include modifying data, deleting data, or the like.

Optionally, the storage system is a NAS system.

An embodiment of this application further provides a computer-readable storage medium. The computer-readable storage medium stores instructions. When the instructions are executed by a processor, the ransomware attack detection method shown in FIG. 4 is implemented.

An embodiment of this application further provides a computer program product, including a computer program. When the computer program is executed by a processor, the ransomware attack detection method shown in FIG. 4 is implemented.

A person of ordinary skill in the art may understand that all or some of the steps of embodiments may be implemented by hardware or a program instructing related hardware. The program may be stored in a computer-readable storage medium. The storage medium may be a read-only memory, a magnetic disk, an optical disc, or the like.

In embodiments of this application, the terms "first", "second", and "third" are merely used for description, but cannot be understood as an indication or implication of relative importance.

The term "and/or" in this application describes only an association relationship for describing associated objects and represents that three relationships may exist. For example, A and/or B may represent the following three cases: Only A exists, both A and B exist, and only B exists. In addition, the character "/" in this specification generally indicates an "or" relationship between the associated objects.

It should be noted that information (including but not limited to user equipment information, personal information of a user, and the like), data (including but not limited to data used for analysis, stored data, displayed data, and the like), and signals in this application are used under authorization by the user or full authorization by all parties, and collection, use, and processing of related data need to conform to related laws, regulations, and standards of related countries and regions.

The foregoing descriptions are merely optional embodiments of this application, but are not intended to limit this application. Any modification, equivalent replacement, improvement, or the like made within the concept and principle of this application shall fall within the protection scope of this application.

## Claims

1. A ransomware attack detection method, wherein the method comprises:
generating one or more honeypot files based on a file feature of a file in a storage system;
deploying the one or more honeypot files in the storage system; and
determining, based on operation behavior for the one or more honeypot files, whether the storage system is under a ransomware attack.

2. The method according to claim 1, wherein the generating the one or more honeypot files based on the file feature of the file in the storage system comprises:
determining a target file type based on a first file feature of the file in the storage system, wherein the first file feature comprises a file type; and
generating a honeypot file of the target file type.

3. The method according to claim 2, wherein the first file feature further comprises one or more of a file name, a file size, a creation timestamp, or a modification timestamp.

4. The method according to claim 3, wherein the storage system comprises a plurality of files, and the determining the target file type based on the first file feature of the file in the storage system comprises:
performing, by using a clustering algorithm, cluster analysis on the plurality of files by using a plurality of features comprised in the first file feature as a plurality of clustering dimensions, to obtain one or more cluster center files; and
using a file type of the one or more cluster center files as the target file type.

5. The method according to any one of claims 2 to 4, wherein the generating the honeypot file of the target file type comprises:
generating the honeypot file of the target file type based on a second file feature of the file in the storage system, wherein the second file feature comprises one or more of a file name, a file size, a creation timestamp, or a modification timestamp.

6. The method according to claim 5, wherein the second file feature comprises the file name, and the generating the honeypot file of the target file type based on the second file feature of the file in the storage system comprises:
determining a file name of the one or more honeypot files based on a file name of a first file and/or a file name of a second file in the storage system, wherein the first file is a file whose file name has a smallest ASCII code value in the storage system, and the second file is a file whose file name has a largest ASCII code value in the storage system.

7. The method according to claim 6, wherein the determining the file name of the one or more honeypot files based on the file name of the first file and/or the file name of the second file in the storage system comprises:
determining a first ASCII code threshold based on the ASCII code value of the file name of the first file, to enable an ASCII code value of a file name of a honeypot file determined based on the first file to be less than or equal to the first ASCII code threshold; and/or
determining a second ASCII code threshold based on the ASCII code value of the file name of the second file, to enable an ASCII code value of a file name of a honeypot file determined based on the second file to be greater than or equal to the second ASCII code threshold, wherein
the second ASCII code threshold is greater than the first ASCII code threshold.

8. The method according to claim 5, wherein the second file feature comprises the file size, and the generating the honeypot file of the target file type based on the second file feature of the file in the storage system comprises:
determining a file size of the one or more honeypot files based on a file size of a third file and/or a file size of a fourth file in the storage system, wherein the third file is a file occupying smallest space in the storage system, and the fourth file is a file occupying largest space in the storage system.

9. The method according to claim 8, wherein the determining the file size of the one or more honeypot files based on the file size of the third file and/or the file size of the fourth file in the storage system comprises:
determining a first file size threshold based on the file size of the third file, to enable a file size of a honeypot file determined based on the third file to be less than or equal to the first file size threshold; and/or
determining a second file size threshold based on the file size of the fourth file, to enable a file size of a honeypot file determined based on the fourth file to be greater than or equal to the second file size threshold, wherein
the second file size threshold is greater than the first file size threshold.

10. The method according to claim 5, wherein the second file feature comprises the creation timestamp, and the generating the honeypot file of the target file type based on the second file feature of the file in the storage system comprises:
determining a creation timestamp of the one or more honeypot files based on a creation timestamp of a fifth file and/or a creation timestamp of a sixth file in the storage system, wherein the fifth file is a file with earliest creation time in the storage system, and the sixth file is a file with latest creation time in the storage system.

11. The method according to claim 10, wherein the determining the creation timestamp of the one or more honeypot files based on the creation timestamp of the fifth file and/or the creation timestamp of the sixth file in the storage system comprises:
determining a first timestamp threshold based on the creation timestamp of the fifth file, to enable a creation timestamp of a honeypot file determined based on the fifth file to be less than or equal to the first timestamp threshold; and/or
determining a second timestamp threshold based on the creation timestamp of the sixth file, to enable a creation timestamp of a honeypot file determined based on the sixth file to be greater than or equal to the second timestamp threshold, wherein
the second timestamp threshold is greater than the first timestamp threshold.

12. The method according to claim 5, wherein the second file feature comprises the modification timestamp, and the generating the honeypot file of the target file type based on the second file feature of the file in the storage system comprises:
determining a modification timestamp of the one or more honeypot files based on a modification timestamp of a seventh file and/or a modification timestamp of an eighth file in the storage system, wherein the seventh file is a file with earliest modification time in the storage system, and the eighth file is a file with latest modification time in the storage system.

13. The method according to claim 12, wherein the determining the modification timestamp of the one or more honeypot files based on the modification timestamp of the seventh file and/or the modification timestamp of the eighth file in the storage system comprises:
determining a third timestamp threshold based on the modification timestamp of the seventh file, to enable a modification timestamp of a honeypot file determined based on the seventh file to be less than or equal to the third timestamp threshold; and/or
determining a fourth timestamp threshold based on the modification timestamp of the eighth file, to enable a modification timestamp of a honeypot file determined based on the eighth file to be greater than or equal to the fourth timestamp threshold, wherein
the fourth timestamp threshold is greater than the third timestamp threshold.

14. The method according to any one of claims 2 to 13, wherein the target file type comprises a text file type, and the generating the honeypot file of the target file type comprises:
generating file content of a honeypot file of the text file type by using a natural language processing model.

15. The method according to any one of claims 1 to 14, wherein the file name of the honeypot file carries a preset sensitive word.

16. The method according to any one of claims 1 to 15, wherein the determining, based on the operation behavior for the one or more honeypot files, whether the storage system is under the ransomware attack comprises:
obtaining an operation sequence of a plurality of consecutive operations for the single honeypot file, wherein the plurality of consecutive operations comprise one or more of a read operation, a write operation, a rename operation, a create operation, or a remove operation;
performing abnormal content detection on the honeypot file when the operation sequence matches a preset ransomware operation sequence pattern; and
determining, based on a result of the abnormal content detection for the honeypot file, whether the honeypot file is under the ransomware attack.

17. The method according to any one of claims 1 to 15, wherein the determining, based on the operation behavior for the one or more honeypot files, whether the storage system is under the ransomware attack comprises:
when a ratio of a quantity of honeypot files on which a first abnormal operation is performed to a quantity of the one or more honeypot files exceeds a first threshold, performing abnormal content detection on the honeypot file on which the first abnormal operation is performed, wherein the first abnormal operation comprises a write operation and a rename operation; and
determining, based on a result of the abnormal content detection for the honeypot file, whether the honeypot file is under the ransomware attack.

18. The method according to claim 16 or 17, wherein performing abnormal content detection on the honeypot file comprises:
performing content matching between current file content of the honeypot file and original file content of the honeypot file, to obtain a modification ratio of the current file content to the original file content; and
the determining, based on the result of the abnormal content detection for the honeypot file, whether the honeypot file is under the ransomware attack comprises:
if the modification ratio is greater than a modification threshold, determining that the honeypot file is under the ransomware attack.

19. The method according to any one of claims 1 to 18, wherein the determining, based on the operation behavior for the one or more honeypot files, whether the storage system is under the ransomware attack comprises:
when a ratio of a quantity of honeypot files on which a second abnormal operation is performed to a quantity of the one or more honeypot files exceeds a second threshold, determining that the honeypot file on which the second abnormal operation is performed is under the ransomware attack, wherein the second abnormal operation comprises a remove operation.

20. A ransomware attack detection apparatus, wherein the apparatus comprises:
a generation module, configured to generate one or more honeypot files based on a file feature of a file in a storage system;
a deployment module, configured to deploy the one or more honeypot files in the storage system; and
a determining module, configured to determine, based on operation behavior for the one or more honeypot files, whether the storage system is under a ransomware attack.

21. The apparatus according to claim 20, wherein the generation module is configured to:
determine a target file type based on a first file feature of the file in the storage system, wherein the first file feature comprises a file type; and
generate a honeypot file corresponding to the target file type.

22. A computer device, comprising a processor and a memory, wherein
the memory is configured to store a computer program, and the computer program comprises program instructions; and
the processor is configured to invoke the computer program, to implement the method according to any one of claims 1 to 19.

23. The computer device according to claim 22, wherein the computer device is integrated into a storage system, or the computer device is in communication connection with the storage system.

24. A storage system, comprising a controller and a storage medium, wherein the storage medium is configured to store data, and the controller is configured to access the data in the storage medium, to implement the method according to any one of claims 1 to 19.

25. The storage system according to claim 24, wherein the storage system is a network attached storage NAS system.

26. A computer-readable storage medium, wherein the computer-readable storage medium stores instructions, and when the instructions are executed by a processor, the method according to any one of claims 1 to 19 is implemented.

27. A computer program product, comprising a computer program, wherein when the computer program is executed by a processor, the method according to any one of claims 1 to 19 is implemented.
